# EUROPEAN PATENT SPECIFICATION

(11) **EP 3 787 896 B1**
(45) Date of publication and mention of the grant of the patent: **09.08.2023**
(21) Application number: 19726498.9
(22) Date of filing: 19.04.2019
(51) Int. Cl.: B32B 9/04, B32B 5/02, B32B 5/04, B32B 7/12, B32B 9/02

(54) **COMPOSITE MATERIAL FOR CLADDING COMPONENTS OF A VEHICLE AND PROCESS FOR PRODUCING SUCH COMPOSITE CLADDING MATERIAL**
VERBUNDSTOFF ZUR KASCHIERUNG VON BESTANDTEILEN EINES FAHRZEUGES UND VERFAHREN ZUR HERSTELLUNG EINES SOLCHEN VERBUNDSTOFFES
MATÉRIAU COMPOSITE POUR LE REVÊTEMENT DE COMPOSANTS D'UN VÉHICULE ET PROCÉDÉ DE PRODUCTION DUDIT MATÉRIAU DE REVÊTEMENT COMPOSITE

(30) Priority: 03.05.2018 IT 201800005058
(43) Date of publication of application: 10.03.2021
(73) Proprietor: Conceria Pasubio S.p.A., 36071 Arzignano (Vicenza) (IT)
(72) Inventor: AZZARETTO, Claudio, 36071 Arzignano (Vicenza) (IT)
(74) Representative: Sandri, Sandro
(86) International application number: PCT/IB2019/053258
(87) International publication number: WO 2019/211695

(56) References cited:
- EP-A1- 2 261 382
- WO-A1-2010/131047
- WO-A1-2014/112404
- CN-A- 106 393 858
- DE-B3-102005 042 470
- DE-U1- 20 317 670
- GB-A- 2 311 250

## Description

### TECHNICAL FIELD

The present invention relates to a material, in particular suitable for cladding components of a vehicle, in particular of an automobile. More specifically, the invention relates to a composite material that can be used to clad internal components, such as the seats, of sports and/or electric automobiles.

In addition, the invention relates to a process for producing the above-mentioned cladding material.

### PRIOR ART

Sports cars are automobiles designed to guarantee high performance during use and, furthermore, envisage dedicating a great deal of attention to the interior and exterior details during the design and production phase that distinguish one sports car from another.

Similarly, electric cars have gained considerable popularity, attracting the interest of a large part of the market, both for environmental reasons and for economic reasons.

For sports cars and electric cars, therefore, the attention to their internal components is critical from an aesthetic point of view and from the point of view of the performance offered.

To ensure that sports and electric cars will maintain the performance for which they are designed (mainly maximum speed and trip autonomy), while at the same time limiting energy consumption, over time producers have sought to reduce the weight of the various components present, so as to optimise the exploitation of the engine torque and obtain lower energy requirements in terms of fuel and/or installed electric power.

Currently, to produce claddings for sports and/or electric cars, chrome-tanned leathers are used, which have an average thickness of 1-1.2 millimetres and a specific weight greater than 700 g/m².

Alternatively, leathers are used that are not chrome-tanned which have the same thickness but a specific weight that is usually greater than 900 g/m².

In both cases, the leathers used guarantee good resistance to wear and a high-quality product suitable to be installed in sports and/or electric cars.

In order to reduce the total weight of the cladding material, which in an automobile can add up to several kilograms, producers have attempted to lower the specific weight through a reduction in the thickness of the leathers used. A reduction in the thickness of the leathers used is in fact obtainable through known technologies that use splitting machines capable of cutting the leathers to be tanned into two pieces in the direction of their thickness.

However, these technologies have proved to result in a number of drawbacks and disadvantages that make their normal use virtually impossible for the production of leathers for cladding automobile interiors.

In fact, it has been verified that a reduction in the thickness of the leather cladding entails a loss of robustness, elasticity and workability in the material, which tends to break more easily.

Consequently, this leads to a reduction in the average life of the leather cladding and an increase in costs for the user.

Document WO 2010/131047 A1 discloses a composite material formed from a sheet of material consisting essentially of animal hide bonded to a textile material. The sheet of material may be leather and the textile material a woven, coated textile. The two materials may be bonded together with a hot melt adhesive which may be provided as a film or web. Bonding the sheet material to a textile material increases the dimensional stability of the material when exposed to sunlight and heat, making it suitable for use in the manufacture of sun blinds for vehicles, such as automobiles.

Document WO 2014/112404 A1 discloses a leather laminate and a manufacturing process therefor. This manufacturing process for a leather laminate includes a tanning step for subjecting an animal raw hide to chrome tanning to form a tanned animal hide, a fatliquoring step for subjecting the tanned animal hide to fatliquoring using a synthetic fatliquoring oil, and a bonding step for laminating, with a hot melt adhesive, a base-layer material on the back of the fatliquored tanned animal hide obtained in the fatliquoring step.

Document GB 2311250 A discloses a leather or leather substitute laminate made by bonding together a first layer of leather or leather substitute material and a second layer of woven synthetic or part synthetic material, for example Lycra spun elastomeric fibre, with the layers having an anisotropic elasticity property and arranged such that the axis or axes of minimum modulus of elasticity in the first layer extend at an angle of 45° or less to that or those in the second layer. The elastic modulus and the elastic power of the second layer may be selected so that is high enough for the second layer to reverse at least a major part of the non-elastic portion of the leather extension on relaxation thereof.

### DESCRIPTION OF THE INVENTION

The present invention aims to eliminate or at least reduce the typical drawbacks and disadvantages of the prior art, and thus to propose a composite leather-based material, in particular suitable for cladding components of a vehicle, which has a relatively low specific weight, and which simultaneously maintains remarkable characteristics of robustness, elasticity and workability.

In particular, an object of the present invention is to provide a material particularly suitable for cladding the components of a vehicle that has a specific weight lower than the claddings currently used in sports and/or electric cars.

In addition, another object of the present invention is to provide a material whose properties of elasticity and tensile strength are comparable with the corresponding properties of a currently used leather cladding. Therefore, specifically, the invention aims to reduce the weight of the cladding used while not reducing the elastic properties and tensile strength offered.

A further object of the present invention is to provide a material able to offer an appearance and feel equal to the appearance and feel of the leather claddings currently on the market.

Finally, the invention aims to provide a process for producing the aforesaid cladding material for automobile components.

The stated technical task and specified objects are substantially achieved by a composite material, in particular a material suitable for cladding components of a vehicle, which comprises the technical features disclosed in claim 1. The dependent claims delineate particularly advantageous embodiments of the invention.

It should be highlighted that this summary introduces, in simplified form, a selection of concepts which will be further elaborated in the detailed description given below.

The invention relates to a composite material, in particular a material suitable for cladding components of a vehicle, comprising a leather layer and a support layer. The leather layer has a first external face which is exposed and a second internal face, while the support layer is adherent to the second internal face of the leather layer so that the composite material has a specific weight equal to or less than 650 g/m².

Advantageously, a composite material assembled in this way makes it possible to combine the properties of greatest interest of the individual layers used. In addition, the composite material obtained makes it possible to clad the internal components of cars, such as the seats, with a layer of leather having a lower thickness than that of the prior art, but which maintains the main properties of flexibility and tensile strength of the thicker leathers which are usually used. In addition, this composite material having a thickness generally equal to approximately 0.8 millimetres advantageously does not have to be re-approved for use, since it falls within the required standards as previously mentioned.

The adhesion layer is interposed between the leather layer and the support layer.

To allow better coupling between the leather layer and the support layer, the adhesion layer is advantageously interposed, having a negligible weight and thickness, which does not alter the final properties of the composite material.

The support layer is made of a thermoplastic material.

According to the invention, the support layer is made of a type of isotropic polyethersulfone material (PESF).

Advantageously, this particular thermoplastic material is produced in the form of a net or fabric and is able to elastically stretch up to about 20% of its nominal length, both along its own transversal direction and along its own longitudinal direction.

According to one aspect of the invention, the support layer is a fabric that comprises at least a plurality of elastic warp fibres and at least a plurality of elastic weft fibres. The elastic warp fibres and the elastic weft fibres are arranged transversally to each other.

Alternatively, the support layer is a net, wherein the elastic warp fibres are arranged spaced from one another and/or the elastic longitudinal and transversal fibres are spaced from one another. The net has a plurality of intersection knots between each longitudinal elastic fibre and each transversal elastic fibre.

In this way, advantageously, it is possible to further reduce the final weight of the composite material.

According to one aspect of the invention, the adhesion layer is interposed between the leather layer and each knot of the fabric forming the support layer.

In this way, the quantity of adhesion layer to be interposed between the leather layer and the support layer is reduced, decreasing production costs.

According to another aspect of the invention, the adhesion layer is a polyamide adhesive.

According to a further aspect of the invention, the leather layer is composed of semi-aniline leather having a finishing thickness of less than 15 microns, or nappa leather having a finishing thickness of less than 50 microns, or embossed leather having a finishing thickness of less than 60 microns.

A process according to the invention for producing a composite material, in particular suitable for cladding components of a vehicle, comprises the operating steps described at claim 7.

Advantageously, the leather layer used during the above process can be either whole or already shaped with dimensions so as to facilitate the splitting and fusing operations. In addition, the leather can already be of the dimensions and final shape for the cladding of the relative internal component of the automobile.

### DESCRIPTION OF AN EMBODIMENT

The present invention relates to a composite material particularly suitable for cladding the components of a vehicle and a process for producing such composite material.

The material according to the invention for cladding the internal components of an automobile, such as the seats, comprises a leather layer and a support layer, made to adhere to each other, such that the material thus obtained possesses a weight specifically equal to or less than 650 g/m².

Preferably, the leathers used for the composition of such composite material are semi-aniline, nappa or embossed. Each of these leathers has a first external face that is exposed and a second internal face. The first face is the processed surface that is visible to the user, while the second face is the rough surface on which a support layer is made to adhere.

According to one embodiment of the invention, the support layer is made of a thermoplastic material with a specific weight of less than 100 g/m².

Advantageously, the thermoplastic material used is isotropic polyethersulfone, the thickness of which corresponds to approximately 0.4 millimetres, the specific weight to approximately 60-90 g/m² and the tensile strength is greater than 150 N/5cm.

According to one aspect of the invention, the support layer is a fabric composed of a plurality of elastic warp fibres and a plurality of elastic weft fibres. The warp and weft fibres, both made of isotropic polyethersulfone, are arranged transversally to each other so as to give the structure an elastic elongation capacity equal to approximately 20% of its length. Advantageously, therefore, the elasticity of the support layer is substantially equal for both a longitudinal direction and a transversal direction, where the longitudinal direction and the transversal direction coincide with the directions of the elastic warp and weft fibres, or vice versa.

According to one embodiment, the support layer is shaped like a net, wherein the elastic longitudinal fibres are arranged spaced from one another and/or the elastic transversal fibres are arranged spaced from one another. This shape has a predetermined density of intersection knots between each elastic warp fibre and each elastic weft fibre.
In this case, the peculiar flexibility and resistance characteristics of the composite material substantially vary within the required standards.

According to one embodiment, for a support layer wherein there are 147 nodes/cm², the tensile strength along the direction of the fibres is about 175 N/5cm.

According to a further embodiment, the tensile strength along the direction of the fibres is comprised between 240 N/5cm and 290 N/5cm.

According to the invention, a polyamide adhesive is interposed between the leather layer and the support layer to facilitate the coupling thereof.

In the case wherein the support layer is shaped like a net, the adhesion layer has a specular shape in order to match it point by point.

Alternatively, according to a further embodiment, the adhesion layer is applied only at the intersection knots of the support layer.

While the coupling between the leather layer and the support layer makes it possible to combine the advantageous properties in question of the individual materials (for example, the appearance and feel of the leather are combined with the strength and elasticity of the isotropic polyethersulfone fabric), the addition of an adhesion layer does not result in any variation in the properties of the composite material, relative to the reduced thickness and reduced weight added thereof.

As previously mentioned, according to the prior art, leather layers are used to clad the internal components of cars having an elasticity and tensile strength such as to ensure adequate resistance over time. Specifically, the leathers with these characteristics have a thickness comprised between 1 millimetre and 1.2 millimetres and an average specific weight comprised between 700 g/m² and 900 g/m².

According to the present invention, however, the coupling between the leather layer and the support layer makes it possible to maintain the characteristics of elasticity, tensile strength and workability of the leather layers of the prior art, reducing the overall thickness and specific weight of the composite material. Advantageously, a composite material comprising a leather layer and having such characteristics will not need to be re-approved for use. In addition, also the aesthetic characteristics, such as the appearance and tactile feel, are maintained in the composite material with respect to the prior art.

Specifically, the composite material obtained has a leather layer (semi-aniline leather having a finishing thickness of less than 15 microns, nappa leather having a finishing thickness of less than 50 microns, or embossed leather having a finishing thickness of less than 60 microns) having an external exposed face and an internal face that is adhered to a support layer (made of isotropic polyethersulfone), by means of a polyamide-based adhesive.

The leather layer, which is advantageously obtained with a splitting machine, may have a thickness of about 0.7 mm and a specific weight of approximately 540 g/m².

The support layer, instead, has a thickness of 0.2 mm and a specific weight of about 60-90 g/m².

The adhesion layer is such as to allow a better coupling of the previous layers, not affecting the thickness and the total weight of the composite material, respectively approximately 0.9 mm and approximately 650 g/m².

According to the invention, the composite material described above is obtained through an industrial process comprising the following operational steps:
- providing a leather layer having a predetermined thickness that is greater than 1 mm and having a first external face and a second face;
- reducing said leather layer to a thickness of less than 1 millimetre using a splitting machine;
- providing a support layer of thermoplastic material; in the form of a fabric or net;
- coupling a polyamide adhesive to said support layer so as to form a glue-coated support layer;
- fusing said glue-coated support layer with said second face of said leather layer;
- laminating the composite material obtained in order to improve the coupling between the layers used and reduce the final thickness of the composite material itself; wherein said support layer is made of isotropic polyethersulfone (PESF).

Advantageously, the leather layer used during the above process can be either whole or already shaped with dimensions so as to facilitate the splitting and fusing operations. In addition, the leather can already be of the dimensions and final shape for the cladding of the relative internal component of the automobile.

## Claims

1. A composite leather-based material for cladding components of a vehicle, comprising:
- a leather layer having a predetermined thickness of less than 0.8 mm, a first external face and a second internal face;
- a support layer made of a thermoplastic material in the form of a fabric or net having a predetermined thickness of about 0.4 mm, adherent to said second face of said leather layer;
- a polyamide adhesive arranged between the leather layer and the support layer;
whereby said composite material has a thickness of less than 1 mm and a specific weight that is less than or equal to 650 g/m²;
**characterised in that** said support layer is made of isotropic polyethersulfone (PESF).

2. The material according to claim 1, **characterised in that** said support layer is a fabric; said fabric comprising a plurality of elastic warp fibres and a plurality of elastic weft fibres arranged transversally to said plurality of elastic warp fibres, and **in that** said elastic fibres are able to lengthen elastically up to about 20% of a rated length thereof.

3. The material according to claim 1, **characterised in that** said support layer is a net, in which a plurality of longitudinal fibres intersect in knots with a plurality of transversal fibres.

4. The material according to claim 3, **characterised in that** said polyamide adhesive is arranged at fibres or knots of said support layer.

5. The material according to any one of the preceding claims, **characterised in that** said leather layer is composed of semi-aniline leather having a finishing thickness of less than 15 microns, or nappa leather having a finishing thickness of less than 50 microns or embossed leather having a finishing thickness of less than 60 microns.

6. The material according to any one of the preceding claims, **characterised in that** the support layer, comprising the adhesive, has a thickness of about 0.4 mm, a specific weight of less than 100 g/m² and a tensile strength of greater than 150 N/5cm.

7. A process for producing a composite material comprising the operating steps of:
providing a leather layer having a predetermined thickness that is greater than 1 mm and having a first external face and a second face;
- reducing said leather layer to a thickness of less than 1 mm using a splitting machine;
- providing a support layer of thermoplastic material in the form of a fabric or net;
- coupling a polyamide adhesive to said support layer so as to form a glue-coated support layer;
- fusing said glue-coated support layer with said second face of said leather layer;
- laminating the composite material;
wherein said support layer is made of isotropic polyethersulfone (PESF).

8. The process according to claim 7, wherein said support layer, comprising the adhesive, has a thickness of about 0.4 mm, a specific weight of less than 100 g/m² and a tensile strength of greater than 150 N/5cm.

## Patentansprüche

1. Verbundstoff auf Lederbasis zur Kaschierung von Bestandteilen eines Fahrzeugs, umfassend:
- eine Lederschicht, aufweisend eine vorbestimmte Dicke von weniger als 0,8 mm, eine erste Außenfläche und eine zweite Innenfläche;
- eine Trägerschicht, hergestellt aus einem thermoplastischen Material in Form eines Gewebes oder Netzes, aufweisend eine vorbestimmte Dicke von etwa 0,4 mm, die an der zweiten Fläche der Lederschicht haftet;
- einen Polyamidklebstoff, der zwischen der Lederschicht und der Trägerschicht angeordnet ist;
wobei der Verbundstoff eine Dicke von weniger als 1 mm und ein spezifisches Gewicht aufweist, das kleiner oder gleich 650 g/m² ist;
**dadurch gekennzeichnet, dass** die Trägerschicht aus isotropem Polyethersulfon (PESF) hergestellt ist.

2. Material nach Anspruch 1, **dadurch gekennzeichnet, dass** die Trägerschicht ein Gewebe ist; wobei das Gewebe eine Vielzahl von elastischen Kettfasern und eine Vielzahl von elastischen Schussfasern umfasst, die quer zu der Vielzahl von elastischen Kettfasern angeordnet sind, und dadurch, dass die elastischen Fasern in der Lage sind, sich elastisch bis zu etwa 20% einer Nennlänge davon zu dehnen.

3. Material nach Anspruch 1, **dadurch gekennzeichnet, dass** die Trägerschicht ein Netz ist, in dem sich eine Vielzahl von Längsfasern in Knoten mit einer Vielzahl von Querfasern schneiden.

4. Material nach Anspruch 3, **dadurch gekennzeichnet, dass** der Polyamidklebstoff an Fasern oder Knoten der Trägerschicht angeordnet ist.

5. Material nach einem der vorhergehenden Ansprüche, **dadurch gekennzeichnet, dass** die Lederschicht aus Semianilinleder mit einer Verarbeitungsdicke von weniger als 15 µm oder aus Nappaleder mit einer Verarbeitungsdicke von weniger als 50 µm oder aus geprägtem Leder mit einer Verarbeitungsdicke von weniger als 60 µm besteht.

6. Material nach einem der vorhergehenden Ansprüche, **dadurch gekennzeichnet, dass** die Trägerschicht, die den Klebstoff umfasst, eine Dicke von etwa 0,4 mm, ein spezifisches Gewicht von weniger als 100 g/m² und eine Zugfestigkeit größer als 150 N/5 cm aufweist.

7. Verfahren zur Herstellung eines Verbundstoffes, umfassend die folgenden Arbeitsschritte:
Bereitstellen einer Lederschicht, aufweisend eine vorbestimmte Dicke, die größer als 1 mm ist, und eine erste Außenfläche und eine zweite Fläche;
- Reduzieren der Lederschicht auf eine Dicke von weniger als 1 mm unter Verwendung einer Spaltmaschine;
Bereitstellen einer Trägerschicht aus thermoplastischem Material in Form eines Gewebes oder Netzes;
- Koppeln eines Polyamidklebstoffs an die Trägerschicht, um eine mit Kleber beschichtete Trägerschicht zu bilden;
- Verschmelzen der mit Kleber beschichteten Trägerschicht mit der zweiten Fläche der Lederschicht;
- Laminieren des Verbundstoffes;
wobei die Trägerschicht aus isotropem Polyethersulfon (PESF) hergestellt ist.

8. Verfahren nach Anspruch 7, wobei die Trägerschicht, die den Klebstoff umfasst, eine Dicke von etwa 0,4 mm, ein spezifisches Gewicht von weniger als 100 g/m² und eine Zugfestigkeit größer als 150 N/5 cm aufweist.

## Revendications

1. Matériau composite à base de cuir pour le revêtement de composants d'un véhicule, comprenant :
- une couche de cuir ayant une épaisseur prédéterminée inférieure à 0,8 mm, une première face externe et une deuxième face interne ;
- une couche de support en matériau thermoplastique sous forme de tissu ou de filet ayant une épaisseur prédéterminée d'environ 0,4 mm, adhérant à ladite deuxième face de ladite couche de cuir ;
- un adhésif en polyamide disposé entre la couche de cuir et la couche de support ;
par lequel ledit matériau composite a une épaisseur inférieure à 1 mm et un poids spécifique inférieur ou égal à 650 g/m² ;
**caractérisé en ce que** ladite couche de support est constituée de polyéthersulfone isotrope (PESF).

2. Matériau selon la revendication 1, **caractérisé en ce que** ladite couche de support est un tissu ; ledit tissu comprenant une pluralité de fibres de chaîne élastiques et une pluralité de fibres de trame élastiques disposées transversalement à ladite pluralité de fibres de chaîne élastiques, et **en ce que** lesdites fibres de chaîne élastiques sont capables de s'allonger élastiquement jusqu'à environ 20 % d'une longueur nominale de celles-ci.

3. Matériau selon la revendication 1, **caractérisé en ce que** ladite couche de support est un filet, dans lequel une pluralité de fibres longitudinales s'entrecroisent dans des noeuds avec une pluralité de fibres transversales.

4. Matériau selon la revendication 3, **caractérisé en ce que** ledit adhésif en polyamide est disposé en correspondance des fibres ou des noeuds de ladite couche de support.

5. Matériau selon l'une quelconque des revendications précédentes, **caractérisé en ce que** ladite couche de cuir est composée de cuir semi-aniline ayant une épaisseur de finition inférieure à 15 microns, ou de cuir nappa ayant une épaisseur de finition inférieure à 50 microns ou de cuir gaufré ayant une épaisseur de finition inférieure à 60 microns.

6. Matériau selon l'une quelconque des revendications précédentes, **caractérisé en ce que** la couche de support, comprenant l'adhésif, a une épaisseur d'environ 0,4 mm, un poids spécifique inférieur à 100 g/m² et une résistance à la traction supérieure à 150 N/5cm.

7. Procédé de production d'un matériau composite, comprenant les étapes fonctionnelles de :
fournir une couche de cuir ayant une épaisseur prédéterminée supérieure à 1 mm et comportant une première face externe et une deuxième face ;
- réduire ladite couche de cuir à une épaisseur inférieure à 1 mm à l'aide d'une machine à refendre ;
- fournir une couche de support en matériau thermoplastique sous la forme d'un tissu ou d'un filet ;
- coupler un adhésif en polyamide à ladite couche de support de manière à former une couche de support enduite de colle ;
- fusionner ladite couche de support enduite de colle avec ladite deuxième face de ladite couche de cuir ;
- laminer le matériau composite ;
dans lequel ladite couche de support est constituée de polyéthersulfone isotrope (PESF).

8. Procédé selon la revendication 7, dans lequel ladite couche de support, comprenant l'adhésif, a une épaisseur d'environ 0,4 mm, un poids spécifique inférieur à 100 g/m² et une résistance à la traction supérieure à 150 N/5cm.
